(19) Europäisches Patentamt / European Patent Office / Office européen des brevets

(11) **EP 4 776 467 A1**

(12) **DEMANDE DE BREVET EUROPEEN**

(43) Date de publication:
**15.07.2026 Bulletin 2026/29**

(21) Numéro de dépôt: **26150667.9**

(22) Date de dépôt: **07.01.2026**

(51) Classification Internationale des Brevets (IPC):
**H02J 7/00** (2026.01)

(52) Classification Coopérative des Brevets (CPC):
**H02J 7/65; H02J 7/40; H02J 7/50; H02J 7/70**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **13.01.2025 FR 2500316**

(71) Demandeur: **Commissariat à l'Energie Atomique et aux Energies Alternatives**
**75015 Paris (FR)**

(72) Inventeurs:
• **PEREIRA, Adrien**
  **38054 GRENOBLE Cedex 09 (FR)**
• **CHAUVIN, Julien**
  **49004 ANGERS Cedex 01 (FR)**
• **DAUCHY, Julien**
  **38054 GRENOBLE Cedex 09 (FR)**
• **VINCENT, Rémi**
  **38054 GRENOBLE Cedex 09 (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCEDE DE MISE EN SECURITE D'UN ENSEMBLE DE N EQUIPEMENTS COMPRENANT DES SYSTEMES DE STOCKAGE ELECTROCHIMIQUE**

(57) Un procédé de mise en sécurité de N équipements (23) dotés d'un système de stockage électrochimique connecté à un système de conversion électrique bidirectionnel (22) pour la charge/décharge, comprend, suite à une augmentation de température :
évaluation d'un niveau de dangerosité par équipement (23) ;
calcul de puissances optimales de décharge respectives pour des systèmes de stockage électrochimique de certains au moins des équipements (23), en fonction au moins des niveaux de dangerosité respectifs évalués pour ces équipements ;
commandes aux systèmes de conversion électrique bidirectionnels (22), pour décharger les systèmes de stockage électrochimique des équipements en fonction des puissances optimales de décharge calculées.

FIG.1

EP 4 776 467 A1

## Description

### Domaine technique

L'invention se situe dans le domaine de la mise en sécurité d'un ensemble de N équipements comprenant chacun un système de stockage électrochimique.

### Technique antérieure

L'augmentation des performances des batteries ainsi que leur usage de plus en plus répandu soulèvent de nouvelles questions autour de la sécurité. Par exemple, il existe un risque d'emballement thermique des batteries Lithium-ion, lorsqu'un ou plusieurs accumulateurs sont abusés électriquement (court-circuit, surcharge), thermiquement ou mécaniquement (perforation) : Feng, X., Ren, D., He, X., & Ouyang, M. (2020). Mitigating Thermal Runaway of Lithium-Ion Batteries. Joule, 4(4), 743-770 (https://doi.org/10.1016/j.joule.2020.02.010). L'emballement thermique, irréversible, mène à une réaction exothermique non contrôlée pouvant générer fumées toxiques, flammes et/ou projection de matière (en fonction du pack batterie utilisé, plus ou moins d'énergie thermique est libérée) ; or ce type de batterie se trouve dans des véhicules électriques de plus en plus nombreux stationnant dans les lieux dotés de bornes de charge des batteries, tels que les parkings, notamment les parkings couverts.

En effet, d'après une étude récente, bien que les incendies liés aux véhicules électriques soient moins fréquents que ceux liés aux voitures thermiques, les feux liés à l'emballement thermique des voitures électriques peuvent durer plusieurs heures (contre quelques dizaines de minutes dans le cas des voitures thermiques) et dégagent des gaz toxiques particuliers extrêmement corrosifs tels que le fluorure d'hydrogène. En outre, du fait entre autres de l'utilisation massive de plastiques dans les voitures modernes, le risque de propagation d'emballement thermique d'un véhicule à un véhicule à proximité est augmenté.

L'état de la technique relatif aux véhicules électriques se divise en deux approches : la réponse à l'emballement thermique et sa prévention.

La première approche consiste à arrêter l'incendie ou à en limiter la propagation en contenant le rayonnement thermique. Par exemple, le procédé « *fireman access »,* issu d'une collaboration entre Renault et le SDIS 78 (Service départemental d'incendie et de secours des Yvelines) permet aux pompiers de noyer la batterie d'un véhicule en feu, grâce à l'utilisation d'un bouchon thermo-fusible. Les couvertures anti-feu sont également des méthodes utilisées par les pompiers pour contenir un feu. Ces solutions nécessitent néanmoins la présence de pompiers pour être réalisées. Des systèmes d'extinction automatique à gaz inertes sont fortement déconseillés dans le cas de parkings couverts. La NFPA (« National Fire Protection Association ») recommande par ailleurs l'installation de gicleurs d'incendie dans tous les parkings couverts.

L'autre approche est de décharger, autant que possible, les accumulateurs électrochimiques lors de la détection d'un défaut pouvant potentiellement mener à l'emballement thermique : par exemple, en cas d'accident affectant un véhicule électrique, de décharger le pack batterie du véhicule. Jaguar Land Rover propose ainsi de décharger les cellules en cas d'accident via des résistances dans la voiture (voir US2015/0051771 A1). Des problèmes se posent toutefois, relatifs à l'encombrement de ces systèmes, à leur efficacité à décharger le système de stockage électrochimique dans un temps inférieur à celui de la survenue d'un incendie ainsi qu'à l'échauffement du système par effet Joule. Cependant, ce système permet de décharger uniquement tout ou partie du véhicule endommagé et est inopérant dans le cas de la propagation d'un incendie entre plusieurs équipements.

Outre les véhicules électriques, d'autres systèmes équipés de stockage électrochimique d'énergie sont confrontés au risque de propagation d'incendie lors de l'emballement thermique. Par exemple, les systèmes stationnaires d'énergie tels que la Victorian Big Battery (Australie) d'une capacité de 450 MWh ont également été confrontés à cette problématique. Cependant, aucune solution de mise en sécurité ne semble exister, mis à part l'espacement des systèmes qui réduit fortement la densité surfacique d'énergie.

Il existe donc un besoin de disposer d'une solution efficace pour la mise en sécurité des véhicules électriques, notamment dans les parkings couverts, et plus globalement pour la mise en sécurité d'équipements avec systèmes de stockage électrochimiques situés dans une zone déterminée.

### Résumé de l'invention

A cet effet, suivant un premier aspect, la présente invention décrit un procédé de mise en sécurité d'un ensemble de N équipements se situant dans une zone déterminée et comprenant chacun un système de stockage électrochimique connecté à un système de conversion électrique bidirectionnel d'un ensemble de système(s) de conversion électrique bidirectionnel(s) installé(s) dans la zone,

chaque système de conversion électrique bidirectionnel étant adapté pour mettre en œuvre sélectivement la charge et la décharge de chaque système de stockage électrochimique qui lui est connecté ;

ledit procédé comprenant les étapes suivantes mises en œuvre par un module électronique de traitement :

(i) réception d'une alerte signalant un incident d'augmentation de température dans la zone ; et suite à la réception de ladite alerte :

(ii) évaluation d'un niveau de dangerosité respectif par équipement, ladite évaluation du niveau de dangerosité par équipement comportant l'évaluation de la dangerosité découlant d'un emballement thermique dudit équipement;

(iii) calcul de puissances optimales de décharge respectives pour des systèmes de stockage électrochimique de certains au moins des équipements, en fonction au moins des niveaux de dangerosité respectifs évalués pour ces équipements ;

(iv) déclenchement de commandes, destinées aux systèmes de conversion électrique bidirectionnels, pour décharger les systèmes de stockage électrochimique des équipements en fonction des puissances optimales de décharge respectivement calculées.

Ainsi, tandis que l'état de la technique, par exemple dans le domaine des véhicules électriques, se focalisait principalement sur le véhicule en défaut pour chercher à limiter la propagation de l'emballement thermique du pack batterie et ne considérait pas les véhicules environnants, l'invention traite le problème de la mise en sécurité dans son contexte global et s'intéresse à la décharge des packs batteries environnants afin de limiter le sur-accident. Ceci est applicable dans tous les environnements comportant une proximité physique entre différentes batteries ou systèmes batteries, par exemple des véhicules électriques garés en charge à proximité les uns des autres, mais aussi des batteries présentes dans un stockage stationnaire.

Dans des modes de réalisation, un tel procédé comprendra en outre l'une au moins des caractéristiques suivantes :

- les étapes (ii) à (iv) sont réitérés jusqu'à ce qu'un critère de fin d'itération soit vérifié ;
- à l'étape iv, il est commandé une décharge, pendant un lapse de temps $\Delta t$, des systèmes de stockage électrochimique des équipements en fonction des puissances optimales de décharge respectivement calculées.
- le niveau de dangerosité respectif par équipement est évalué en fonction d'au moins un élément parmi :

l'énergie stockée dans le système de stockage électrochimique de l'équipement ;

l'état de charge du système de stockage électrochimique de l'équipement (la prise en compte de l'état de charge diffère quelque peu de celle de l'énergie stockée, une batterie avec un état de chargé élevé (en %) pouvant potentiellement être plus sensible à une montée en température qu'une batterie avec un SOC (en %) plus faible) ;

la distance entre l'équipement et la source de l'augmentation de température ;

un compromis entre l'énergie stockée dans le système de stockage électrochimique de l'équipement et la distance entre l'équipement et la source de l'augmentation de température ;

l'énergie maximale stockable dans le système de stockage électrochimique de l'équipement ;

lesdites puissances optimales de décharge respectives sont déterminées par optimisation sous contrainte(s) d'une fonction dont les variables dont les valeurs sont à déterminer comprennent lesdites puissances électriques de décharge, l'optimisation sous contrainte(s) de la fonction étant fonction au moins des niveaux de dangerosité respectifs évalués et en outre d'un ou plusieurs éléments parmi :

les puissances électriques maximales des systèmes électriques de conversion bidirectionnels,

la puissance électrique maximale d'un système énergétique global raccordé électriquement aux systèmes électriques de conversion bidirectionnels,

un coefficient de pondération par équipement fonction du point d'emplacement de l'équipement au sein de la zone,

un seuil maximal de température par système de stockage ;

- l'optimisation de ladite fonction comprend au moins un aspect parmi :

la réduction des niveaux de dangerosité des équipements ;

la minimisation de l'énergie thermique dégagée par les systèmes de stockage électrochimique en cas d'augmentation de température dans le local ;

la maximisation de l'énergie électrique déchargée par les systèmes de stockage électrochimique via les systèmes électriques de conversion bidirectionnels ;

- au moins une partie de l'énergie électrique issue de la décharge est envoyée vers au moins un élément parmi :

  un réseau d'alimentation électrique ;
  au moins un bloc de stockage énergétique externe à la zone ;
  des packs batterie d'équipements à charger
  et l'optimisation sous contrainte(s) de la fonction étant fonction en outre de caractéristique(s) électrique(s) dudit au moins un élément ;

- chaque système électrique de conversion bidirectionnel, suite à la réception d'une commande pour décharger le système de stockage électrochimique d'un équipement auquel ledit système électrique de conversion bidirectionnel est connecté, met en œuvre avec ledit système de stockage électrochimique ladite commande de décharge, qui est donc fonction de la puissance optimale de décharge respectivement calculée pour ledit système de stockage électrochimique ;

les équipements sont des véhicules électriques, et la zone est un parking.

Suivant un autre aspect, l'invention décrit un dispositif électronique de traitement pour la mise en sécurité d'un ensemble de N équipements se situant dans une zone déterminée et comprenant chacun un système de stockage électrochimique connecté à un système de conversion électrique bidirectionnel d'un ensemble de système(s) de conversion électrique bidirectionnel(s) installé(s) dans la zone,

chaque système de conversion électrique bidirectionnel étant adapté pour mettre en œuvre sélectivement la charge et la décharge de chaque système de stockage électrochimique qui lui est connecté ;
ledit dispositif étant adapté pour recevoir une alerte signalant un incident d'augmentation de température dans la zone ;
le dispositif étant adapté pour, suite à la réception de ladite alerte, évaluer un niveau de dangerosité respectif par équipement, pour calculer des puissances optimales de décharge respectives pour des systèmes de stockage électrochimique de certains au moins des équipements, en fonction au moins des niveaux de dangerosité respectifs évalués pour ces équipements ;
ladite évaluation du niveau de dangerosité par équipement comportant l'évaluation de la dangerosité découlant d'un emballement thermique dudit équipement
le dispositif étant adapté pour déclencher des commandes, destinées aux systèmes de conversion électrique bidirectionnels, pour décharger les systèmes de stockage électrochimique des équipements en fonction des puissances optimales de décharge respectivement calculées.

Suivant un autre aspect, l'invention décrit un produit programme d'ordinateur comprenant des instructions logicielles pour la mise en œuvre d'un procédé comme décrit auparavant.

L'invention décrit également un support d'enregistrement lisible par ordinateur stockant un tel programme d'ordinateur. Les supports d'enregistrement concernés peuvent comporter un moyen de stockage, tel qu'une ROM, par exemple un CD ROM ou une ROM de circuit microélectronique, ou encore un moyen d'enregistrement magnétique, par exemple une clé USB ou un disque dur. De tels supports d'enregistrement peuvent être des supports transmissibles tels qu'un signal électrique ou optique, qui peut être acheminé via un câble électrique ou optique, par radio ou par d'autres moyens, de sorte que le programme d'ordinateur qu'il contient est exécutable à distance. Les programmes selon l'invention peuvent être en particulier téléchargés sur un réseau par exemple le réseau Internet. De tels supports d'enregistrement peuvent comprendre un circuit intégré dans lequel le programme est incorporé, le circuit étant adapté pour exécuter ou pour être utilisé dans l'exécution du procédé de contrôle d'affichage précité.

## Brève description des figures

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 est une illustration d'un parking implémentant une solution dans un mode de réalisation de l'invention ;

[Fig. 2] La figure 2 est un graphe illustrant des valeurs de puissances relatives à des packs batteries de véhicules stationnés dans le parking de la figure 1 ;

[Fig. 3] La figure 3 représente des étapes d'un procédé de mise en sécurité dans un mode de réalisation de l'invention.

Des références identiques peuvent être utilisées dans des figures différentes lorsqu'elles désignent des éléments identiques ou comparables.

## Description détaillée

Dans les modes de réalisation ci-dessous, l'exemple est pris d'un ensemble de véhicules électriques comprenant des batteries. Plus généralement, l'invention s'applique à un ensemble de batteries partageant une certaine proximité physique, qu'il s'agisse de véhicules électriques garés à proximité les uns des autres, ou d'un groupe de batteries rassemblés pour un usage particulier, par exemple pour fournir un stockage électrique de grande capacité comme c'est le cas pour le stockage stationnaire. D'un point de vue thermique, l'emballement thermique d'un système de stockage électrochimique (encore appelé cellule électrochimique ou accumulateur électrochimique ou ici (pack) batterie) dans un équipement, par exemple un véhicule électrique, peut être caractérisé par deux grandeurs : l' « énergie d'amorçage » et l'« énergie dégagée ».

L'énergie d'amorçage est l'énergie thermique minimum nécessaire pour initier un phénomène d'emballement thermique de l'accumulateur électrochimique.

Tandis que l'énergie dégagée est, elle, l'énergie thermique dégagée une fois la réaction irréversible d'emballement thermique initiée.

Afin de limiter la propagation de l'emballement thermique d'un pack batterie de véhicule à un autre, une solution peut donc être de limiter l'énergie dégagée tout en augmentant l'énergie minimum nécessaire pour faire partir les packs batterie environnants.

Ces énergies sont dépendantes d'une multitude de paramètres : par exemple la variété de composés chimiques qui peuvent être employés pour constituer les matériaux d'anode et de cathode des cellules, le nombre de cellules, leur niveau de santé, leur état de charge... certains étant propres à chaque véhicule.

Un des principes de l'invention est, dans le cas des véhicules électriques se trouvant dans une zone donnée et connectés électriquement à des bornes de recharge bidirectionnelle (donc adaptées pour alternativement charger et décharger les batteries, autrement appelées système de conversion électrique bidirectionnel), d'influer sur le niveau de charge (en anglais « State of Charge » ou SoC, i.e. un pourcentage traduisant le niveau d'énergie relatif contenu à un moment donné) des batteries, soit en chargeant les batteries (utilisation usuelle des bornes), soit en les déchargeant.

Afin de définir une stratégie de charge/décharge des packs batteries, il est intéressant de comprendre l'influence du SoC sur les énergies caractérisant l'emballement thermique. Une cellule avec un faible SoC nécessite davantage d'énergie pour partir en emballement qu'une cellule pleinement chargée. En outre, plus une cellule est chargée électriquement, plus elle dégagera de l'énergie thermique lors de l'emballement thermique.

Enfin, le niveau d'énergie (SoE pour l'anglais « State of Energy », est une estimation de l'énergie restante dans la cellule et a une influence sur l'énergie dégagée lors de l'emballement thermique de la cellule.

Le niveau d'énergie permet alors de comparer un certain niveau de dangerosité d'une cellule à une autre. Ce raisonnement est extrapolable à l'échelle d'un module ou d'un pack batterie entier. C'est sur ce concept que l'invention repose dans un mode de réalisation. L'invention cherche donc à réduire les niveaux d'énergie présents dans les packs batteries afin de limiter leur dangerosité.

L'invention, dans un mode de réalisation, comprend l'estimation de niveaux de dangerosité des véhicules électriques se trouvant dans une zone présentant un risque d'incendie ou d'échauffement thermique. Cette estimation est effectuée par exemple en fonction notamment de l'un et/ou l'autre des paramètres « SoE », « SoC », de leurs packs batterie respectifs, de leur distance respective par rapport à la source d'échauffement. Puis il est recherché une solution permettant de réduire les risques d'emballement et de propagation, en mettant en œuvre des commandes de décharge sélective des packs batterie, afin de réduire le niveau de dangerosité de ceux-ci.

Un mode de réalisation de l'invention va maintenant décrit, dans un exemple où les équipements munis de systèmes de stockage électrique sont des véhicules électriques stationnés dans un parking.

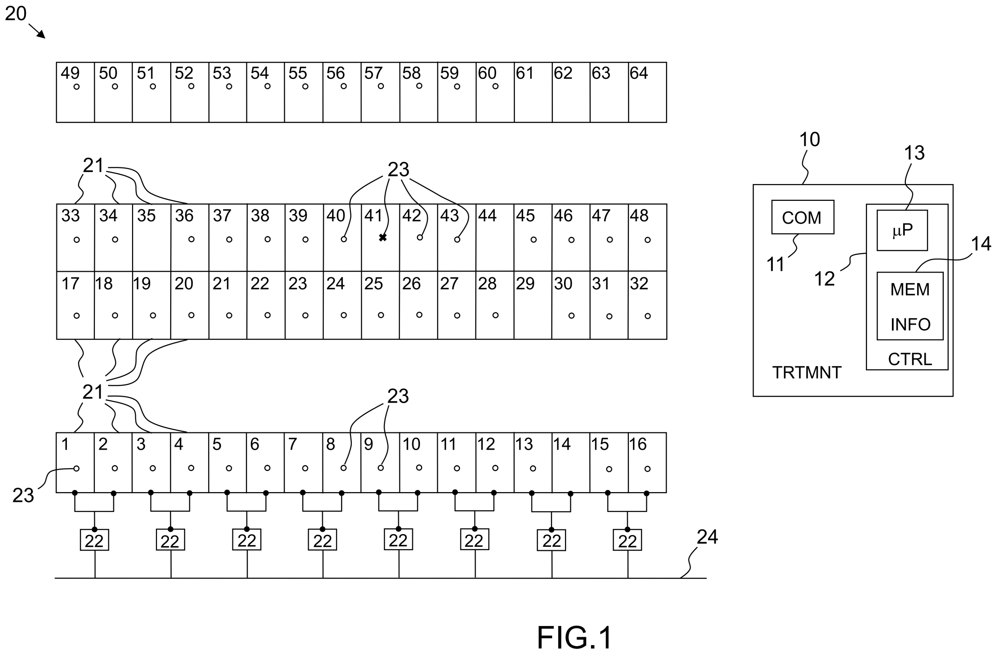

Ainsi, en référence à la figure 1, il est considéré un parking 20, comportant P places de stationnement 21, P étant un entier supérieur ou égal à 1 (dans un mode de réalisation, P est un entier supérieur ou égal à 2).

Les places de stationnement 21 (la référence 21 n'apparaît en figure 1 que sur une partie de ces places, pour davantage de lisibilité) considérées ici sont disposées en quatre rangées de seize places chacune et sont numérotées de 1 à P = 64 : le numéro d'une place de stationnement est indiqué sur la place en figure 1.

Chaque voiture électrique 23 en stationnement sur une place 21 est indiquée par la présence d'un petit rond ou étoile sur la place de stationnement concernée. Une place de stationnement sans rond/étoile est une place non occupée par un véhicule électrique. Chaque voiture électrique 23 comporte un pack de batteries électrochimiques adapté pour alimenter le moteur de la voiture 23 pour permettre son déplacement.

Le parking 20 comporte en outre une ou des bornes de recharge bidirectionnelles 22, un dispositif électronique de traitement pour mise en sécurité 10, un système énergétique global 24 et un système de détection d'incident (non représenté).

Le système de détection d'incident et le dispositif de traitement 10 pour mise en sécurité 10 sont adaptés pour établir entre eux une liaison de télécommunication, par exemple sans fil, pour échanger des données entre eux.

Le dispositif de traitement 10 et chaque borne de recharge bidirectionnelles 22 sont adaptés pour établir entre eux une liaison de télécommunication, par exemple sans fil, pour échanger des données entre eux.

Le système de détection d'incident comprend un ensemble de capteurs, par exemple répartis dans le parking 20 et est adapté pour détecter, voire localiser, via les capteurs, un incident, par exemple un incendie ou plus généralement, une augmentation anormale de température (et/ou tout autre événement justifiant un traitement de mise en sécurité des packs batteries de véhicules stationnés dans le parking 20). Le système de détection d'incident est adapté pour, lorsqu'il détecte un tel incident, émettre une alerte correspondante à destination du dispositif de traitement 10, via la liaison de télécommunications entre eux, signalant un problème d'échauffement/incendie et indiquant le cas échéant l'emplacement de la source du problème (cet emplacement ayant été déduit par exemple à l'aide des données fournies par les capteurs du système de détection d'incident). L'incident peut provenir d'une voiture stationnée ou bien d'une autre source, typiquement une poubelle.

Le dispositif de traitement 10, par exemple un système de gestion centrale du réseau de bornes de recharge 22, comprend un bloc de télécommunication 11 adapté pour mettre en œuvre les liaisons de communication respectives avec le système de détection d'incident et avec les bornes 22 et un bloc électronique de contrôle 12.

Le bloc de contrôle 12 est adapté pour mettre en œuvre un procédé de traitement de mise en sécurité selon l'invention. Dans un mode de réalisation, le bloc de contrôle 12 comprend une mémoire 14.

Les bornes 22 sont au nombre de m. Dans le cas présent, il existe une borne 22 pour chaque paire de places 21 consécutives, m est donc ici égal à 32. La borne $b_i$ dessert les places n° 2i-1 et 2i, i allant de 1 à m = 32. Pour des raisons de lisibilité de la figure 1, seules les bornes 22 de la rangée de places 21 n°1 à 16 ont été représentées en figure 1.

Bien sûr d'autres configurations sont envisageables : dans des modes de réalisation, une borne $b_i$ est dédiée à $m_i$ places de stationnement, avec $b_i$ et $m_i$ chacun entier quelconque supérieur ou égal à 1 et le produit $m_{i \times} b_i$ étant supérieur ou égal à P (nombre de places 21 dans le parking, ici P= 64).

Le pack de batterie de chaque véhicule stationné sur une place 21 est adapté pour être connecté électriquement à la borne 22 associée à ladite place 21 par un câble associé également à la place 21 et est adapté pour être alternativement chargé et déchargé par cette borne 22.

Quand un tel pack batterie est connecté par un câble à une borne 22, la borne 22 est adaptée pour, par défaut, charger le pack batterie via ce câble. La borne 22 est adaptée en outre pour obtenir, via ce câble, des informations sur le pack batterie du véhicule en charge, voire des informations sur le véhicule, par exemple via le protocole OCPP (Open Charge Point Protocol) ou un protocole équivalent.

Les informations collectées par la borne 22 relatives à un véhicule stationné sur une place 21 associée à la borne comportent ainsi, relativement à ce véhicule, une ou plusieurs informations, nommées INFO, parmi :

- présence ou absence sur ladite place 21 d'un véhicule dont le pack batterie est relié par câble à la borne 22 ; et pour un tel véhicule électrique présent :
- le niveau d'énergie (SoE) courant du pack batterie du véhicule ;
- l'état de charge (SoC) courant du pack batterie du véhicule ;
- le niveau d'énergie maximal de charge du pack batterie du véhicule ;
- la température courante du pack batterie du véhicule ;
- le type de pack batterie, la masse et/ou la capacité thermique de la batterie, le type du véhicule.

Ces informations, et leur réactualisation sont par exemple transmises régulièrement par la borne 22 au dispositif de traitement 10 via la liaison de télécommunication les reliant (par exemple, en cas de changement des valeurs des informations collectées, elles sont transmises dès qu'un intervalle de temps, de durée δt définie s'est écoulé depuis la dernière transmission des informations, la durée définie par exemple comprise entre 1 seconde (s) et 60 s.

Le bloc de contrôle 12 du dispositif de traitement 10 stocke, dans une base de données dans sa mémoire 14, ces informations INFO transmises par chaque borne 22. Cette base de données contient ainsi, pour chaque place de stationnement 22, outre l'identification de cette place de stationnement : sa localisation (par exemple ses coordonnées géographiques 3D), l'identification de la borne 22 qui lui est associée, l'indication de si un pack batterie d'un véhicule sur cette place 21 est connecté à la borne 22 via le câble associé à la place de stationnement ainsi que, plus globalement, les informations collectées, INFO, telles que dernièrement actualisées relatives au pack batterie et le cas échéant au véhicule comportant ce pack batterie.

Chaque borne 22 est en outre adaptée, pour, sur réception d'une commande de décharge, en provenance du bloc de traitement 10 via la liaison de télécommunication les reliant, et relative à un pack batterie sur une place de stationnement 21 qui est associée à la borne, stopper toute charge en cours vers un pack batterie d'un véhicule située sur cette place de stationnement et mettre en œuvre la commande de décharge reçue : le pack batterie du véhicule se décharge alors vers la borne 22 conformément à la commande de décharge. En particulier, l'intensité du courant de décharge est fonction de la puissance de décharge indiquée dans la commande.

Chaque borne 22 est connectée électriquement, par câblage électrique, au système énergétique global 24. La borne 22 reçoit en provenance du système énergétique global 24 l'énergie électrique nécessaire pour charger les packs batteries. La borne 22 envoie, en direction du système énergétique global 24, l'énergie électrique de décharge provenant des packs batteries. Dans un mode de réalisation, le système énergétique global 24 est du type (ou comprend un raccordement à un) réseau d'alimentation électrique public ou privé.

Le principe de l'invention est le suivant : suite à la réception d'une alerte de détection d'un incident en provenance du système détection d'incident, le bloc de contrôle 12, en fonction des informations collectées INFOS telle que stockées en mémoire 14, évalue un niveau de dangerosité pour chaque véhicule en fonction notamment des informations relatives à ce véhicule et/ou à sa place de stationnement (et le cas échéant au pack batterie du véhicule), détermine la décharge optimale des packs batteries respectifs du parking connectés aux bornes en fonction notamment de ce niveau de dangerosité (dans un mode de réalisation pour diminuer leur niveau de dangerosité) et envoie les commandes correspondantes aux bornes pour qu'elles mettent en œuvre les décharges déterminées.

Le niveau de dangerosité d'un véhicule présent sur une place 21 peut être estimé de différentes façons par le bloc de contrôle 12, par exemple en fonction d'un élément ci-dessous ou de plusieurs de ces éléments combinés :

- distance entre le véhicule et la source de l'incident (le niveau de dangerosité décroit en fonction de cette distance : plus la distance est proche, plus le niveau de dangerosité est élevé) ; cette distance est déterminée par le bloc de contrôle 12 en fonction des coordonnées de la place de stationnement du véhicule et de l'emplacement de la source de l'incident, indiqué dans l'alerte ;
- le niveau d'énergie du pack batterie du véhicule ;
- le SOC du pack batterie du véhicule ;
- le type de pack batterie, la taille du véhicule, le type de véhicule : traduisant notamment la quantité de plastiques ;
- la « sensibilité » liée à la place de stationnement (par exemple, un emplacement à proximité d'une sortie de secours rend le véhicule plus dangereux car l'impact, si jamais ce véhicule était soumis à un emballement thermique, serait plus important que pour un emplacement lambda).

Les décharges optimales sont définies en fonction des niveaux de dangerosité et en fonction d'un ou plusieurs objectif(s) prédéfini(s) suivant les modes de réalisation : un objectif est par exemple de réduire le niveau de dangerosité ; un objectif est par exemple de limiter la propagation thermique d'un véhicule électrique à un autre lors d'un emballement thermique (par exemple en jouant notamment sur le niveau d'énergie de chaque véhicule et ou sur le SOC de chaque véhicule) ; un objectif est de maximiser l'énergie évacuée ; un objectif est par exemple de respecter, dans la détermination des valeurs de décharge, des contraintes, telles que des valeurs maximales admissibles de températures des packs (éventuellement dépendant des types de packs), des limites maximales de puissance tolérées par les bornes, par les batteries et/ou le système énergétique central 23.

Dans un mode de réalisation, la détermination des décharges optimales se traduit par la définition d'un problème à résoudre, modélisé à l'aide de :

- une fonction objectif (traduisant le ou les objectifs retenus) : typiquement « baisser le niveau de dangerosité »,
- des contraintes à respecter (puissances limites, valeurs maximales admissibles de températures des packs,...),
- des variables de conception, dépendant du mode de réalisation, (traduisant par exemple l'utilisation de système de refroidissement des packs batterie).

Et ce problème ainsi défini est ensuite résolu par le bloc de contrôle 12 à l'aide de méthodes connues, par exemple : programmation par contrainte, méthode de résolution à base de gradient, de Hessiennes, de méta-heuristiques, de réseau de neurones à apprentissage automatique etc.

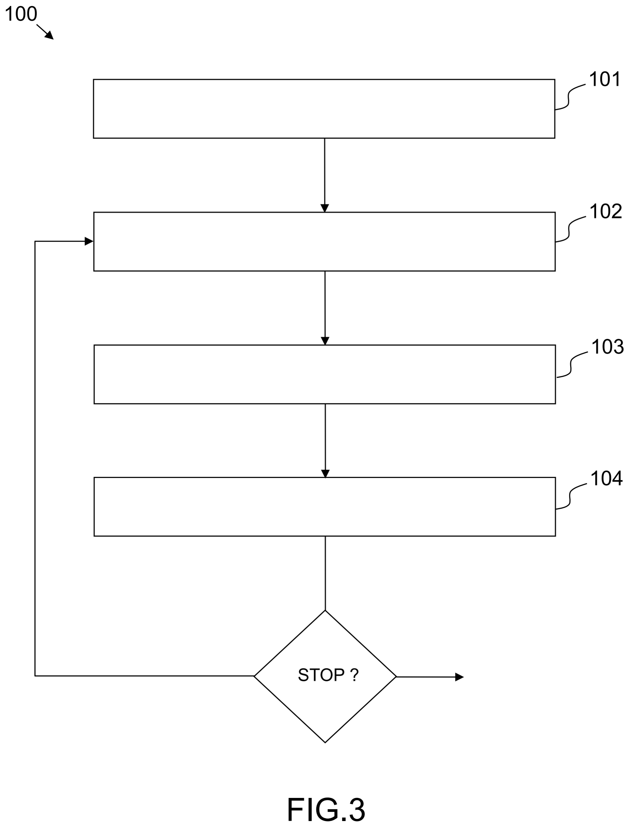

Les étapes d'un procédé 100 de mise en sécurité dans un mode de réalisation de l'invention appliqué aux véhicules du parking 20 sont indiquées à la figure 3. Le bloc de contrôle 12 est adapté pour mettre en œuvre les étapes du procédé de traitement de mise en sécurité incombant au bloc de contrôle et décrites à la figure 3. Dans un mode de réalisation, le bloc de contrôle 12 comprend un microprocesseur 13 et la mémoire 14 comprend des instructions logicielles qui lorsqu'elles sont exécutées par le microprocesseur 13, mettent en œuvre ces étapes.

Ainsi, l'étape 101 comprend la réception, par le bloc de contrôle 12, d'une alerte signalant un risque critique, dû à la détection d'augmentation de température dans le parking 20, en provenance du système de détection d'incident (ou déclenchée manuellement par le gardien du parking par exemple). L'alerte contient par exemple d'autres informations caractérisant l'incident (localisation, gradient de température détectée ...).

La réception de l'alerte déclenche la mise en œuvre par le bloc de contrôle 20 de l'étape 102, comprenant l'estimation d'un niveau de dangerosité respectif par véhicule. Cette estimation est effectuée en fonction des informations stockées dans la base de données 13 caractérisant notamment l'occupation des places de stationnements.

Dans une étape 103, le bloc de contrôle 12 calcule alors les puissances optimales de décharge respectives pour les packs batterie de certains au moins des véhicules, en fonction au moins des niveaux de dangerosité respectifs estimés.

Dans une étape 104, le bloc de contrôle 12 déclenche des commandes destinées aux bornes 22 pour décharger les packs batterie des véhicules, ces commandes étant fonction des puissances optimales de décharges respectivement calculées.

Les bornes 22, à la réception de ces commandes, mettent en œuvre sélectivement les décharges des packs batteries des véhicules conformément aux commandes respectives reçues pendant un lapse de temps $\Delta t$ (dans un mode de réalisation $\Delta t \geq \delta t$).

Dans un mode de réalisation, un critère d'arrêt du processus de mise en sécurité est testé, par exemple à l'issue de ce lapse de temps $\Delta t$; et en fonction du résultat du test, le processus est réitéré à partir de l'étape 102, en fonction d'informations collectées réactualisées ou alors le processus est stoppé là.

Le critère d'arrêt comprend par exemple un test d'une ou plusieurs conditions parmi : une durée prédéfinie écoulée depuis le lancement du procédé itératif, la réception de l'information que les packs batterie (ou ceux identifiés comme dangereux, par exemple avec un niveau de dangerosité supérieur à un seuil) sont entièrement déchargés ou tout autre paramètre permettant d'assurer la sécurité des voitures tel que confirmation de la fin d'intervention des pompiers.

Ainsi, par exemple, après la première itération, décharge des packs par puissance optimales pendant un lapse de temps $\Delta t$, recalcul des nouvelles puissances optimales de décharge qui sont appliquées durant un lapse de temps $\Delta t$, .etc, jusqu'à atteindre un critère d'arrêt (pack entièrement déchargé, ...).

Par exemple, à l'issue de la première itération du processus, les véhicules situés de part et d'autre d'un véhicule en emballement thermique source de la détection d'incident pourront se retrouver entièrement déchargés, ceux un peu plus loin avoir subi une décharge de -70%, et ceux encore plus loin une décharge de - 50% etc.

Une mise en œuvre détaillée de ces étapes est maintenant décrite dans un mode de réalisation particulier. Un des véhicules, celui représenté par une croix en figure 1, stationné sur la place n°41, est sujet à un emballement thermique, ce qui donne lieu à une détection d'incident par le système de détection d'incident. Le système de détection d'incident envoie, suite à la détection, une alerte au dispositif de traitement signalant l'incident et indiquant en outre que la source du problème est située en place n°41.

Pour rappel, les véhicules stationnés autres que celui en emballement thermique sont représentés chacun par un petit rond sur les places de stationnement concernées.

Un objectif considéré ici est de minimiser l'énergie dégagée par les véhicules en cas de propagation de l'incendie, ce qui revient alors dans le cas considéré à minimiser pour chacune des voitures environnantes leur niveau de dangerosité. En effet, comme décrit plus haut, le niveau de dangerosité peut être évalué de multiples façons. Dans l'exemple considéré, il est défini en fonction du ratio « énergie-distance », $E_i/d_i$, de chaque véhicule $V_i$ stationné considéré, i = 1 à n (n étant le nombre de véhicule stationnés considérés, n = 55 dans le cas illustré dans la figure 1 sans compter ici le véhicule source de l'incendie), la distance $d_i$ étant celle entre le véhicule $V_i$ et la localisation détectée de l'incident (place n°41) et $E_i$ étant le dernier niveau d'énergie collecté du véhicule $V_i$ tel que figurant dans la mémoire 14.

Dans le mode de réalisation considéré, le bloc de contrôle 12 pondère en outre, par exemple non linéairement, le niveau de dangerosité avec une fonction $f$. Cette fonction permet alors de favoriser, par exemple, la distance à l'énergie quand la voiture concerné est à proximité de la voiture en feu.

Un terme, $\omega_i$, i = 1 à n, qui prend ici la forme d'un coefficient de pondération de la fonction du ratio « énergie-distance », permet, quant à lui, de prendre en compte l'environnement du parking (système de ventilation, murs notamment porteurs qui limitent la propagation...).

Enfin, la variable de décision optimale à déterminer $x_i$ est la puissance électrique à décharger depuis la batterie du véhicule $V_i$. En effet, étant donné que le niveau de dangerosité est quantifié comme le ratio « énergie-distance » et qu'il n'est possible de jouer que sur l'énergie des packs, il est ici cherché à maximiser la puissance fournie par le pack, et ce, afin d'évacuer le plus d'énergie possible. La fonction objectif à optimiser par le bloc de contrôle 12 correspond donc à la recherche du maximum ci-dessous :

$$\max \sum_{i=1}^{n} \omega_i * f\left(\frac{E_i}{d_i}\right) * x_i \qquad (1)$$

On notera que le problème de maximisation peut également être formulé en tant que problème de minimisation, la fonction objectif devenant alors :

$$\min \sum_{i=1}^{n} - \omega_i * f\left(\frac{E_i}{d_i}\right) * x_i \qquad (2)$$

Trouver les puissances de décharge optimales pour limiter la dangerosité des packs batterie revient alors à résoudre un problème d'optimisation contraint. Les contraintes expriment les limites en puissance des véhicules 23, des bornes 22 ainsi que du réseau 23. Un tel problème d'optimisation peut être représenté sous la forme du CSP suivant (de l'anglais « Constraint Satisfaction Problem ») :

min $c^T x$

s.t. $Ax \le b$ et $0 \le x_i \le P_{i\_max}$ avec i allant de 1 à n

-

(s. t. signifiant en anglais « subject to » et introduisant des contraintes à respecter),

$$x = \begin{bmatrix} x_1 \\ \vdots \\ x_n \end{bmatrix}$$

$$c^T = \begin{bmatrix} -\omega_1 * f\left(\frac{E_1}{d_1}\right) & ... & -\omega_n * f\left(\frac{E_n}{d_n}\right) \end{bmatrix} \qquad (3)$$

$$b = \begin{bmatrix} P_r \\ P_{b\_1} \\ \vdots \\ P_{b\_m} \end{bmatrix}$$

$$A = \begin{pmatrix} 1 & 1 & 1 & 1 & ... & 1 \\ 1 & 1 & 0 & 0 & ... & 0 \\ 0 & 0 & 1 & 1 & ... & 0 \\ \vdots & \vdots & \vdots & \vdots & ... & \vdots \\ 0 & 0 & 0 & 0 & ... & 1 \end{pmatrix}$$

La matrice A, de taille (m + 1, n), représente les coefficients des contraintes linéaires du problème avec m le nombre de bornes et n le nombre de voitures présentes dans le parking (hors celle qui est source de l'incendie). Elle ne comporte que des 0 et 1.

La première ligne correspond à l'activation de la contrainte de puissance 'réseau', tandis que les m lignes suivantes correspondent aux activations des contraintes des m bornes du parking 20.

Etant donnée la configuration des bornes 22 par rapport aux places de stationnement 21 de l'exemple considéré, la ligne i+1, i = 1 à m, de la matrice A comporte ici des 0 partout sauf pour la $(2i-1)^{\text{ème}}$ colonne où se trouve un 1 dans le cas où une voiture est stationnée sur la place n°2i-1 et pour la $(2i)^{\text{ème}}$ colonne où se trouve un 1 dans le cas où une voiture est stationnée sur la place n°2i.

Suivant la même logique, le vecteur b de taille (m + 1) correspond aux valeurs de puissance à ne pas dépasser (réseau et bornes) : $P_r$ est la puissance maximale du système énergétique global 24 (i.e. la puissance max totale recevable par le système 24 en provenance de l'ensemble des bornes), $P_{b\_i}$ est la puissance maximale que la borne $b_i$ (i.e. la puissance max totale recevable par la borne en provenance des véhicules qui lui sont connectés),

Enfin, chaque valeur de puissance $x_i$ est bornée par la puissance maximale en décharge du pack batterie du véhicule $V_i$, notée $P_{i\_max}$, i = 1 à n.

Le bloc de contrôle 12 résout ce CSP, ce qui lui fournit les puissances optimales de décharges visées. Dans le cas considéré où la fonction objectif ainsi que les contraintes sont linéaires, le problème peut donc être résolu, par exemple, par une simple méthode de programmation linéaire.

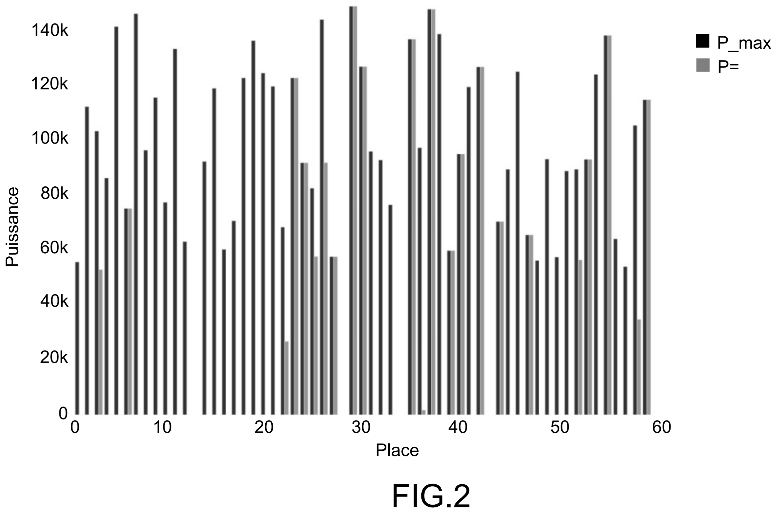

Le graphe en figure 2 illustre le résultat de la mise en œuvre de ce mode de réalisation de l'invention pour la configuration illustrée en figure 1. Les énergies disponibles ainsi que les puissances maximales en jeu ont été générées de manière aléatoire. Les pondérations $\omega_i$ ont été négligées et une fonction f de la forme $f(x) = \alpha/(1 + x)^2 + b$ a été choisie. La résolution, à un instant t, du CSP a été réalisée par le solver HiGHS (voir Q. Huangfu and J. A. J. Hall, "Parallelizing the dual revised simplex method," Math. Program. Comput., vol. 10, no. 1, pp. 119-142, Mar. 2018, doi: 10.1007/s12532-017-0130-5) via l'API de Scipy. Pour chacune des places indiquées par son numéro (n°i) en abscisse, la valeur de puissance maximale $P_{i\_max}$ (barre noire) ainsi que la puissance optimale P* calculée (barre grise) sont représentées lorsqu'un véhicule y est stationné. Ainsi pour une place où aucune voiture n'est stationnée (), il n'y aura pas de barre noire, ni de barre grise. Et pour une place où une voiture est stationnée, l'absence de barre grise indique qu'aucune décharge n'a été décidée pour la voiture, suite à la mise en œuvre du procédé.

Le procédé selon l'invention peut être mis en œuvre par l'exécution d'instructions logicielles sur un processeur, comme décrit plus haut. Alternativement, il peut être mis en œuvre par un hardware dédié, typiquement un circuit intégré numérique, soit spécifique (ASIC) ou basé sur une logique programmable (par exemple FPGA/Field Programmable Gate Array).

L'invention a été décrite ci-dessus en considérant comme équipements des véhicules électriques stationnés dans un parking. Elle est bien sûr applicable à tout environnement faisant appel à des systèmes de batteries stationnaires dans des équipements et possédant un système de conversion électrique de charge/décharge bidirectionnel. Les applications potentielles sont donc multiples. Parmi les principales applications, on trouve, outre les parkings automobiles, les centrales de stockage d'électricité, les usines de fabrication de batteries ...

Dans un mode de réalisation, le système énergétique global 24 vers lequel l'énergie électrique déchargée des batteries est envoyée est un réseau d'alimentation électrique public ou privé. Dans des modes de réalisation, afin notamment de limiter la saturation du réseau, il est choisi, à la place ou en plus, de redistribuer tout ou partie de l'énergie à des systèmes de stockage externes, vers des volants d'inertie ou vers les bornes de charge d'autres voitures du parking non affectées par l'incident (par exemple à un autre étage), redéfinissant le système énergétique global. La modification des contraintes correspondantes est alors à prendre en compte dans le système à optimiser.

Dans un mode de réalisation, le bloc de contrôle 12 est adapté pour en outre contrôler des systèmes de refroidissement des packs batteries (BTMS) afin de limiter l'échauffement des packs lors de leur décharge et pour définir les paramètres pour un contrôle optimal des BTMS. L'activation ou non des BTMS ainsi que de leurs variables associées (vitesse fluide, ...) sont des variables qui sont également déterminées par le système à optimiser, et elles sont à associer à des contraintes qui sont les températures maximales des packs.

Dans des modes de réalisation, d'autres critères à optimiser sont définis ainsi que des contraintes associées additionnelles : par exemple, la température des packs batterie est prise en compte, afin de limiter leur échauffement durant la décharge. La formulation du problème d'optimisation à résoudre est alors adaptée en conséquence, de même que les méthodes de résolution.

Dans un exemple d'intégration d'une contrainte de température sur un pack batterie qui assurera que la température, notée $T_i(\Delta t)$, du pack batterie de la voiture V$i$ à la fin d'un temps de décharge $\Delta t$ ne dépassera pas une température seuil $T_{i\_max}$, notée ainsi :

$$T_i(\Delta t) \leq T_{i\_max} \tag{4}$$

Il devient alors nécessaire de formuler $T_i(\Delta t)$ en fonction de la variable d'optimisation $x_i$ (puissance de décharge du véhicule Vi) : $g(x_i) = T_i(\Delta t)$. Il existe de nombreuses modélisations thermiques prenant les gradients de température au sein du pack batterie et considérant le BTMS. Il est ici choisi à titre d'exemple une modélisation simplifiée qui ne considère pas les échanges thermiques du pack avec son environnement et où la température du pack est uniforme, telle que :

$$m_i c_i \frac{dT_i}{dt} = \dot{q}_i \tag{5}$$

avec $\frac{dT_i}{dt}$ la variation de température du pack en fonction du temps, $m_i$ la masse du pack batterie du véhicule Vi, et $c_i$ la capacité thermique spécifique du pack batterie (dans un mode de réalisation, on utilise la masse et capacité thermique spécifique d'une cellule à la place de la masse et capacité thermique spécifique du pack batterie). Ces données seront récupérées par la borne 22 associée à la place de stationnement du véhicule Vi par le biais du bloc BMS du pack batterie (en anglais Battery Management System), puis transmises dans l'ensemble d'informations INFO, au dispositif de traitement 10. Le paramètre $\dot{q}_i$ représente le terme source de chaleur. Ici, on ne considérera que l'effet irréversible dû à l'effet joule.

L'équation (5) peut être résolue analytiquement, avec $T_i(0)$, la température du pack batterie avant la décharge telle que :

$$T_i(t) = \frac{\dot{q}_i}{m_i c_i} t + T_i(0) \tag{6}$$

En utilisant la résistance interne du pack batterie, notée $R_i$ (également collectée par le dispositif de traitement 10 dans INFO, via le BMS et la borne 22 ou bien calculée) :

$$\dot{q}_i = R_i I_i^2 \tag{7}$$

Une fois $\dot{q}_i$ exprimé, il devient possible d'exprimer $I_i$ comme étant le ratio entre notre variable d'optimisation $x_i$ et la tension du pack $U_i$ (monitorée, donc connue) :

$$I_i = \frac{x_i}{U_i} \tag{8}$$

En regroupant les équations (6), (7) et (8), il devient alors possible d'exprimer $T_i(\Delta t)$ sous la forme :

$$T_i(\Delta t) = R_i \left(\frac{x_i}{U_i}\right)^2 \frac{\Delta t}{m_i c_i} + T_i(0) \tag{9}$$

La contrainte (4) s'exprime alors de la forme :

$$R_i \left(\frac{x_i}{U_i}\right)^2 \frac{\Delta t}{m_i c_i} + T_i(0) \leq T_{i\_max} \tag{10}$$

La formulation de la contrainte est ici quadratique en fonction de la variable de conception $x_i$, qui est la puissance de décharge (à déterminer) du pack batterie du véhicule Vi. Un solveur capable de gérer cette contrainte sera dans ce cas mis en œuvre par le bloc de contrôle 12. De manière générale, la formulation des contraintes ainsi que de la fonction objective influe sur la manière de résoudre le problème d'optimisation, tout comme les niveaux de modélisation utilisés afin de représenter les phénomènes physiques (thermique, électrique, ...).

## Revendications

1. Procédé de mise en sécurité d'un ensemble de N équipements (23) se situant dans une zone déterminée (20) et comprenant chacun un système de stockage électrochimique connecté à un système de conversion électrique bidirectionnel (22) d'un ensemble de système(s) de conversion électrique bidirectionnel(s) (22) installé(s) dans la zone,

   chaque système de conversion électrique bidirectionnel (22) étant adapté pour mettre en œuvre sélectivement la charge et la décharge de chaque système de stockage électrochimique qui lui est connecté ;
   ledit procédé comprenant les étapes suivantes mises en œuvre par un module électronique de traitement (10) :

   (i) réception d'une alerte signalant un incident d'augmentation de température dans la zone (20) ; et suite à la réception de ladite alerte :
   (ii) évaluation d'un niveau de dangerosité respectif par équipement (23), ladite évaluation du niveau de dangerosité par équipement comportant l'évaluation de la dangerosité découlant d'un emballement thermique dudit équipement ;
   (iii) calcul de puissances optimales de décharge respectives pour des systèmes de stockage électrochimique de certains au moins des équipements (23), en fonction au moins des niveaux de dangerosité respectifs évalués pour ces équipements ;
   (iv) déclenchement de commandes, destinées aux systèmes de conversion électrique bidirectionnels (22), pour décharger les systèmes de stockage électrochimique des équipements en fonction des puissances optimales de décharge respectivement calculées.

2. Procédé de mise en sécurité d'un ensemble de N équipements (23) selon la revendication 1, comprenant l'une et/ou l'autre des dispositions suivantes :

   - les étapes (ii) à (iv) sont réitérés jusqu'à ce qu'un critère de fin d'itération soit vérifié ;
   - à l'étape iv, il est commandé une décharge, pendant un lapse de temps Δt, des systèmes de stockage électrochimique des équipements en fonction des puissances optimales de décharge respectivement calculées.

3. Procédé de mise en sécurité d'un ensemble de N équipements (23) selon l'une quelconque des revendications 1 et 2, selon lequel le niveau de dangerosité respectif par équipement (23) est évalué en fonction d'au moins un élément parmi :

   l'énergie stockée dans le système de stockage électrochimique de l'équipement ;
   l'état de charge du système de stockage électrochimique de l'équipement ;
   la distance entre l'équipement et la source de l'augmentation de température ;
   un compromis entre l'énergie stockée dans le système de stockage électrochimique de l'équipement et la distance entre l'équipement et la source de l'augmentation de température ;
   l'énergie maximale stockable dans le système de stockage électrochimique de l'équipement.

4. Procédé de mise en sécurité selon l'une quelconque des revendications précédentes selon lequel lesdites puissances optimales de décharge respectives sont déterminées par optimisation sous contrainte(s) d'une fonction dont les variables dont les valeurs sont à déterminer comprennent lesdites puissances électriques de décharge, l'optimisation sous contrainte(s) de la fonction étant fonction au moins des niveaux de dangerosité respectifs évalués et en outre d'un ou plusieurs éléments parmi :

   - les puissances électriques maximales des systèmes électriques de conversion bidirectionnels (22),
   - la puissance électrique maximale d'un système énergétique global (24) raccordé électriquement aux systèmes électriques de conversion bidirectionnels (23),
   - un coefficient de pondération par équipement fonction du point d'emplacement de l'équipement au sein de la zone (20),
   - un seuil maximal de température par système de stockage.

5. Procédé de mise en sécurité selon la revendication précédente, selon lequel l'optimisation de ladite fonction comprend au moins un aspect parmi :

   - la réduction des niveaux de dangerosité des équipements (23) ;
   - la minimisation de l'énergie thermique dégagée par les systèmes de stockage électrochimique en cas d'augmentation de température dans le local ;
   - la maximisation de l'énergie électrique déchargée par les systèmes de stockage électrochimique via les systèmes électriques de conversion bidirectionnels (22).

6. Procédé de mise en sécurité selon la revendication 4 ou 5, selon lequel au moins une partie de l'énergie électrique issue de la décharge est envoyée vers au moins un élément parmi :

   - un réseau d'alimentation électrique ;
   - au moins un bloc de stockage énergétique externe à la zone ;
   - des packs batterie d'équipements à charger

   et l'optimisation sous contrainte(s) de la fonction étant fonction en outre de caractéristique(s) électrique(s) dudit au moins un élément.

7. Procédé de mise en sécurité selon l'une quelconque des revendications précédentes, selon lequel chaque système électrique de conversion bidirectionnel (22), suite à la réception d'une commande pour décharger le système de stockage électrochimique d'un équipement auquel ledit système électrique de conversion bidirectionnel est connecté, met en œuvre, avec ledit système de stockage électrochimique, ladite commande de décharge, qui est donc fonction de la puissance optimale de décharge respectivement calculée pour ledit système de stockage électrochimique.

8. Procédé de mise en sécurité selon l'une quelconque des revendications précédentes, selon lequel les équipements (23) sont des véhicules électriques, et la zone (20) est un parking.

9. Programme d'ordinateur, destiné à être stocké dans la mémoire (14) d'un dispositif électronique de traitement (10) et comprenant en outre un microcalculateur (13), ledit programme d'ordinateur comprenant des instructions qui, lorsqu'elles sont exécutées sur le microcalculateur, mettent en œuvre les étapes d'un procédé selon l'une des revendications précédentes.

10. Dispositif électronique de traitement (10) pour la mise en sécurité d'un ensemble de N équipements (23) se situant dans une zone déterminée (20) et comprenant chacun un système de stockage électrochimique connecté à un système de conversion électrique bidirectionnel (22) d'un ensemble de système(s) de conversion électrique bidirectionnel(s) (22) installé(s) dans la zone,

chaque système de conversion électrique bidirectionnel (22) étant adapté pour mettre en œuvre sélectivement la charge et la décharge de chaque système de stockage électrochimique qui lui est connecté ;
ledit dispositif (10) étant adapté pour recevoir une alerte signalant un incident d'augmentation de température dans la zone ;
le dispositif étant adapté pour, suite à la réception de ladite alerte, évaluer un niveau de dangerosité respectif par équipement (23), pour calculer des puissances optimales de décharge respectives pour des systèmes de stockage électrochimique de certains au moins des équipements, en fonction au moins des niveaux de dangerosité respectifs évalués pour ces équipements ;
ladite évaluation du niveau de dangerosité par équipement comportant l'évaluation de la dangerosité découlant d'un emballement thermique dudit équipement ;
le dispositif étant adapté pour déclencher des commandes, destinées aux systèmes de conversion électrique bidirectionnels (22), pour décharger les systèmes de stockage électrochimique des équipements en fonction des puissances optimales de décharge respectivement calculées.

FIG.1

EP 4 776 467 A1

FIG.2

FIG.3

**RAPPORT DE RECHERCHE EUROPEENNE**

Europäisches Patentamt
European Patent Office
Office européen des brevets

Numéro de la demande

EP 26 15 0667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2015/051771 A1 (GREENWOOD JEREMY [GB] ET AL) 19 février 2015 (2015-02-19) * revendication 17 * ----- | 1-10 | INV. H02J7/00 |
| A | US 2023/088976 A1 (SCHIMPE MICHAEL [DE]) 23 mars 2023 (2023-03-23) * alinéas [0003] - [0005] * ----- | 1-10 | |

**DOMAINES TECHNIQUES RECHERCHES (IPC)**

H02J

Le présent rapport a été établi pour toutes les revendications

| Lieu de la recherche | Date d'achèvement de la recherche | Examinateur |
|---|---|---|
| Munich | 23 février 2026 | Bourdon, Jérémy |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P04C02)

# EP 4 776 467 A1

## ANNEXE AU RAPPORT DE RECHERCHE EUROPEENNE
## RELATIF A LA DEMANDE DE BREVET EUROPEEN NO.

EP 26 15 0667

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-02-2026

| Document brevet cité au rapport de recherche | Date de publication | Membre(s) de la famille de brevet(s) | | Date de publication |
|---|---|---|---|---|
| US 2015051771 A1 | 19-02-2015 | CN | 104203638 A | 10-12-2014 |
| | | EP | 2828118 A2 | 28-01-2015 |
| | | GB | 2500427 A | 25-09-2013 |
| | | JP | 6271500 B2 | 31-01-2018 |
| | | JP | 6542856 B2 | 10-07-2019 |
| | | JP | 2015518702 A | 02-07-2015 |
| | | JP | 2018029466 A | 22-02-2018 |
| | | US | 2015051771 A1 | 19-02-2015 |
| | | WO | 2013139943 A2 | 26-09-2013 |
| US 2023088976 A1 | 23-03-2023 | CN | 115939541 A | 07-04-2023 |
| | | DE | 102021124474 A1 | 23-03-2023 |
| | | US | 2023088976 A1 | 23-03-2023 |

EPO FORM P0460

## EP 4 776 467 A1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20150051771 A1

**Littérature non-brevet citée dans la description**

- **FENG, X.** ; **REN, D.** ; **HE, X.** ; **OUYANG, M.** Mitigating Thermal Runaway of Lithium-Ion Batteries.. *Joule*, 2020, vol. 4 (4), 743-770, https://doi.org/10.1016/j.joule.2020.02.010

- **Q. HUANGFU** ; **J. A. J. HALL**. Parallelizing the dual revised simplex method. *Math. Program. Comput.*, March 2018, vol. 10 (1), 119-142